# EUROPEAN PATENT APPLICATION

(11) **EP 4 685 748 A1**
(43) Date of publication of application: **28.01.2026**
(21) Application number: 25191315.8
(22) Date of filing: 23.07.2025
(51) Int. Cl.: G06T 11/00

(54) **METAL ARTIFACT CORRECTION**

(30) Priority: 26.07.2024 US 202418785165
(71) Applicant: DENTSPLY SIRONA Inc., York, PA 17401 (US)
(72) Inventor: MAUR, Susanne, 64625 Bensheim (DE); HUELSBUSCH, Markus, 64625 Bensheim (DE)
(74) Representative: Aldridge, Henry Alexander

(57) **Abstract**

Metal artifact correction including projecting x-rays to scan a volumetric region of an object, the projecting generates corresponding cone beam computed tomography (CBCT) image data, reconstructing an enlarged CBCT volume from the CBCT image data, the enlarged CBCT volume representative of the volumetric region and a volume outside the volumetric region, generating from the enlarged CBCT volume and a projection geometry, maximum intensity projections on a virtual plane, detecting attenuated image areas in the maximum intensity projections corresponding to metal, corresponding the detected attenuated image areas corresponding to the metal to areas of the CBCT image data, and reconstructing a final CBCT volume using the CBCT image data by suppression of the areas of the CBCT image data corresponding to the detected attenuated image areas of the maximum intensity projections. Systems for metal artifact correction are also disclosed.

## Description

### BACKGROUND

### Technical Field

The present disclosure pertains to a metal artifact correction, and more specifically to correcting metal artifacts caused by metals inside and outside of the scanned volume.

### Description of the Related Art

Cone Beam Computed Tomography (CBCT) systems are widely used in medical, dental, and industrial applications to provide high-resolution, three-dimensional images. CBCT imaging is particularly beneficial in dental and maxillofacial imaging, where detailed visualization of bone structures, teeth, and surrounding tissues can be provided. The technology may employ a cone-shaped X-ray beam and a flat-panel detector to acquire volumetric data in a rotation around the patient.

CBCT volumes can include metal artifacts which distort the volume. The artifact may be caused by the high density and radio opaqueness of metallic objects, such as dental implants, orthodontic brackets, surgical screws, and other metallic hardware. These artifacts can manifest as streaks, starbursts, shadows and the like in the reconstructed volumes or 3D images.

### BRIEF SUMMARY

According to an illustrative embodiment, a method involves projecting x-rays to scan a volumetric region of an object and generate cone beam computed tomography (CBCT) image data, reconstructing an enlarged CBCT volume that includes the volumetric region and an area outside it, creating maximum intensity projections on a virtual plane from the enlarged CBCT volume and projection geometry, detecting attenuated image areas corresponding to metal in these projections, transferring locations of (i.e., corresponding) these detected areas to the CBCT image data, and reconstructing a final CBCT volume by suppressing areas of the CBCT image data corresponding to the attenuated image areas.

In an embodiment, the reconstructing includes modifying the CBCT image data by altering areas of the CBCT corresponding to the attenuated image areas corresponding to the metal to mitigate the effects of the metal in a subsequent reconstruction, reconstructing an intermediate volume using the modified CBCT image data, correlating the image areas of the maximum intensity projections or of the CBCT image data corresponding to the metal with the intermediate volume, reinserting the metal or a modification of the metal (such as a blending/weighting/smoothing of pixel information of the metal) to modify the intermediate volume, and displaying the modified intermediate volume as a final volume.

According to an illustrative embodiment, an x-ray system includes a processor and memory with instructions that enable the system to project x-rays to scan an object's volumetric region to generate cone beam computed tomography (CBCT) image data, reconstruct an enlarged CBCT volume representing the scanned region and an area outside it, create maximum intensity projections on a virtual plane from the enlarged CBCT volume and projection geometry, detect metal-related attenuated image areas in these projections, correspond these areas to the CBCT image data, and reconstruct a final CBCT volume by suppressing the areas corresponding to the attenuated image areas.

According to an illustrative embodiment, a non-transitory computer-readable storage medium includes instructions that, when executed by a computer, cause it to project x-rays to scan a volumetric region of an object and generate cone beam computed tomography (CBCT) image data; reconstruct an enlarged CBCT volume representing the volumetric region and an area outside it; generate maximum intensity projections on a virtual plane from the enlarged CBCT volume and a projection geometry; detect attenuated image areas corresponding to metal in the projections; correspond these detected areas to the CBCT image data; and reconstruct a final CBCT volume by suppressing the areas corresponding to the attenuated image areas.

### BRIEF DESCRIPTION OF THE DRAWINGS

To easily identify the discussion of any particular element or act, the most significant digit or digits in a reference number refer to the figure number in which that element is first introduced.
FIG. 1 depicts a block diagram of a network of data processing systems in accordance with an illustrative embodiment.
FIG. 2 depicts a block diagram of a data processing system in accordance with an illustrative embodiment.
FIG. 3 depicts a block diagram of an x-ray system in accordance with an illustrative embodiment.
FIG. 4 depicts an x-ray system taking a scan of a volumetric region in accordance with an illustrative embodiment.
FIG. 5 depicts an enlarged CBCT volume and corresponding maximum intensity projection in accordance with an illustrative embodiment.
FIG. 6 depicts a slice through an enlarged CBCT volume in accordance with an illustrative embodiment.
FIG. 7 depicts maximum intensity projection of an enlarged CBCT volume in accordance with an illustrative embodiment.
FIG. 8 depicts a slice through an enlarged CBCT volume in accordance with an illustrative embodiment.
FIG. 9 depicts maximum intensity projection of an enlarged CBCT volume in accordance with an illustrative embodiment.

### DETAILED DESCRIPTION

### Overview

In the following detailed description, numerous specific details are set forth by way of examples to provide a thorough understanding of the relevant teachings. However, it should be apparent that the present teachings may be practiced without such details. In other instances, well-known methods, procedures, and/or components have been described at a relatively high level, without detail, to avoid unnecessarily obscuring aspects of the present teachings.

The illustrative embodiments recognize that metal detection in an x-ray operation may be carried out by threshold detection in a volume, subsequent projection of the metal positions into an image for rectification before reconstructing another volume with the rectified images. However, this may detect only metals within the volume of interest scanned and miss metal and artifacts outside the volume. The illustrative embodiments recognize that metal outside of the volume can still lead to artifacts in the volume. Increasing the scanned volume of interest, in a bid to capture all metal outside the volume may however increase the dosage of x-rays used on a patient. Further, metal detection in the volume may be made more difficult by strong **"cupping artifacts" caused by the metals.**

The illustrative embodiments disclose metal artifact detection and correction for dental x-ray machines including projecting x-rays to scan a volumetric region of an object, the projecting generates corresponding cone beam computed tomography (CBCT) two-dimensional (2D) image data. The CBCT image data is projection data (2D), which is also referred to as a sinogram or CBCT raw data or CBCT projection data. An enlarged CBCT volume (three-dimensional data) is reconstructed from the CBCT image data, the enlarged CBCT volume being representative of the scanned volumetric region as well as a volume outside the volumetric region. Maximum intensity projections are generated, from the enlarged CBCT volume and a projection geometry, onto a virtual plane, and attenuated image areas in the maximum intensity projections corresponding to metal are detected. As used herein attenuated image areas corresponding to metal generally refers to attenuated image areas corresponding to x-ray opaque or nearly x-ray opaque structures of which metal may be the most common. In the illustrative embodiments, the detected attenuated image areas corresponding to the metal are corresponded to the CBCT image data, and a final CBCT volume is reconstructed based on the CBCT image data by suppression of areas of the CBCT image data corresponding to the attenuated image areas of the maximum intensity projections.

The illustrative embodiments are described with respect to certain types of machines. The illustrative embodiments are also described with respect to other scenes, subjects, measurements, devices, data processing systems, environments, components, and applications only as examples. Any specific manifestations of these and other similar ones are not intended to be limiting to the disclosure. Any suitable manifestation of these and other similar ones can be selected within the scope of the illustrative embodiments.

Furthermore, the illustrative embodiments may be implemented with respect to any type of data, data source, or access to a data source over a data network. Any type of data storage device may provide the data to an embodiment of the disclosure, either locally at a data processing system or over a data network, within the scope of the disclosure.

The illustrative embodiments are described using specific code, hardware, algorithms, designs, architectures, protocols, layouts, schematics, and tools only as examples and are not limiting to the illustrative embodiments. Furthermore, the illustrative embodiments are described in some instances using particular software, tools, and data processing environments only as an example for the clarity of the description. The illustrative embodiments may be used in conjunction with other comparable or similarly purposed structures, systems, applications, or architectures. For example, other comparable devices, structures, systems, applications, or architectures therefor, may be used in conjunction with such embodiment of the disclosure within the scope of the disclosure. An illustrative embodiment may be implemented in hardware, software, or a combination thereof.

The examples in this disclosure are used only for the clarity of the description and are not limiting to the illustrative embodiments. Additional data, operations, actions, tasks, activities, and manipulations will be conceivable from this disclosure and the same are contemplated within the scope of the illustrative embodiments.

Any advantages listed herein are only examples and are not intended to be limiting to the illustrative embodiments. Additional or different advantages may be realized by specific illustrative embodiments. Furthermore, a particular illustrative embodiment may have some, all, or none of the advantages listed above.

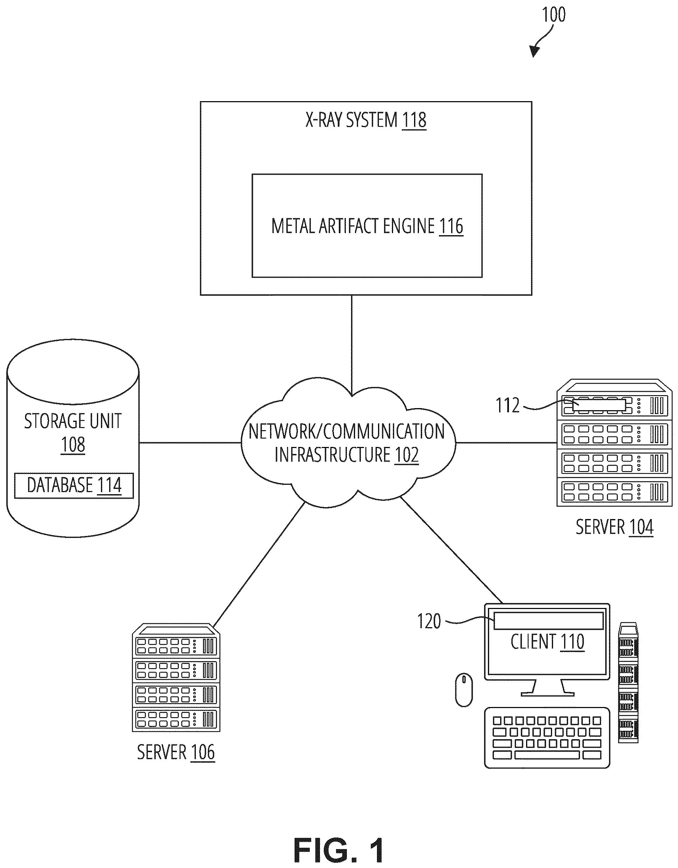

FIG. 1 depicts a block diagram of an environment of data processing systems in which illustrative embodiments may be implemented. Data processing environment 100 is a network of engines and computers in which the illustrative embodiments may be implemented. Data processing environment 100 can include network/communication infrastructure 102. Network/communication infrastructure 102 is the medium used to provide communications links between various devices, databases and computers connected together within data processing environment 100. Network/communication infrastructure 102 may include connections, such as wired connections, wireless communication protocols, or other suitable data connectivity.

The x-ray system 118 can implement embodiments described herein. The x-ray system 118 can include a metal artifact engine 116 which may further include an embedded application to use data of the x-ray system 118 for detecting and correcting metal artifacts. The embedded application can also execute in any of data processing systems (server 104 or server 106, client 110), such as server application 112 in server 104 or client application 120 in client 110.

In CBCT, an x-ray source and a corresponding detector may rotate around a patient, record multiple projection images, and utilize the projection images to reconstruct a 3D volume. In a scenario where metal, such as a metal filling, is present in the patient volume, the information in a subsequent reconstruction may not be complete since metal artifacts, such as artifacts that appear as streaks, shadows and/or incorrect geometries of the metal, may be caused to appear in subsequent volume reconstructions due to the presence of the metal, thus blocking out some relevant patient anatomy from being properly visualized. As discussed herein, the metal artifact engine 116 discussed herein may be adapted with logic to detect and correct metal artifacts caused by metals inside and outside of the physically scanned initial volume thereby alleviating or eliminating a need to increase a volumetric region of the object being scanned. In essence, metal may be visible in CBCT image data. The metal and corresponding metal artifacts may also be visible in the reconstructed volume data. To suppress the metal artifacts in the reconstructed volume, the metal in in the CBCT image data may be suppressed before reconstruction. To detect the metal in the CBCT image data, maximum intensity projection may be generated for subsequent processing as discussed herein.

Turning back to FIG. 1, clients or servers are only example roles of certain data processing systems connected to network/communication infrastructure 102 and are not intended to exclude other configurations or roles for these data processing systems. Server 104 and server 106 couple to network/communication infrastructure 102 along with storage unit 108. Software applications may execute on any computer in data processing environment 100. Client 110 is also coupled to network/communication infrastructure 102. A data processing system, such as server 104 or server 106, client 110 may include data and may have software applications or software tools executing thereon.

Only as an example, and without implying any limitation to such architecture, FIG. 1 depicts certain components that are usable in an example implementation of an embodiment. As another example, an embodiment can be distributed across several data processing systems and a data network as shown, whereas another embodiment can be implemented on a single data processing system within the scope of the illustrative embodiments.

Data processing environment 100 may include additional servers, clients, and other devices that are not shown. Server 104 includes the server application 112 that may be configured to implement one or more of the functions described herein for displaying restoration proposals in accordance with one or more embodiments.

Server 106 may include a search engine configured to search stored files such as images of patient teeth for comparison in response to a request for detecting tooth defects. In the depicted example, data processing environment 100 may be the Internet. Network/communication infrastructure 102 may represent a collection of networks and gateways that use the Transmission Control Protocol/Internet Protocol (TCP/IP) and other protocols to communicate with one another. FIG. 1 is intended as an example, and not as an architectural limitation for the different illustrative embodiments.

Among other uses, data processing environment 100 may be used for implementing a client-server environment in which the illustrative embodiments may be implemented. A client-server environment enables software applications and data to be distributed across a network such that an application functions by using the interactivity between a client data processing system and a server data processing system. Data processing environment 100 may also employ a service-oriented architecture where interoperable software components distributed across a network may be packaged together as coherent business applications. Data processing environment 100 may also take the form of a cloud, and employ a cloud computing model of service delivery for enabling convenient, on-demand network access to a shared pool of configurable computing resources (e.g. networks, network bandwidth, servers, processing, memory, storage, applications, virtual machines, and services) that can be rapidly provisioned and released with minimal management effort or interaction with a provider of the service.

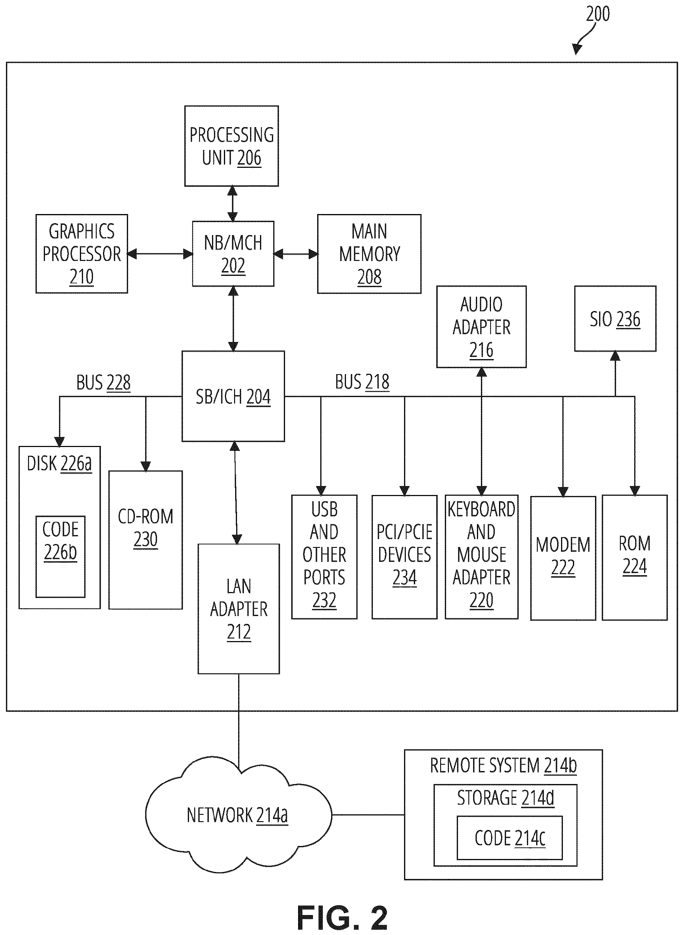

With reference to FIG. 2, this figure depicts a block diagram of a data processing system in which illustrative embodiments may be implemented. Data processing system 200 is an example of a computer, such x-ray system 118, client 110, server 104 or server 106 in FIG. 1, or another type of device in which computer usable program code or instructions implementing the processes may be located for the illustrative embodiments.

Data processing system 200 is described as a computer only as an example, without being limited thereto. Implementations in the form of other devices, may modify data processing system 200, such as by adding a touch interface, and even eliminate certain depicted components from data processing system 200 without departing from the general description of the operations and functions of data processing system 200 described herein.

In the depicted example, data processing system 200 employs a hub architecture including North Bridge and memory controller hub (NB/MCH) 202 and South Bridge and input/output (I/O) controller hub (SB/ICH) 204. Processing unit 206, main memory 208, and graphics processor 210 are coupled to North Bridge and memory controller hub (NB/MCH) 202. Processing unit 206 may include one or more processors and may be implemented using one or more heterogeneous processor systems. Processing unit 206 may be a multi-core processor. Graphics processor 210 may be coupled to North Bridge and memory controller hub (NB/MCH) 202 through an accelerated graphics port (AGP) in certain implementations.

In the depicted example, local area network (LAN) adapter 212 is coupled to South Bridge and input/output (I/O) controller hub (SB/ICH) 204. Audio adapter 216, keyboard and mouse adapter 220, modem 222, read only memory (ROM) 224, universal serial bus (USB) and other ports 232, and PCI/PCIe devices 234 are coupled to South Bridge and input/output (I/O) controller hub (SB/ICH) 204 through bus 218. Hard disk drive (HDD) or solid-state drive (SSD) 226a and CD-ROM 230 are coupled to South Bridge and input/output (I/O) controller hub (SB/ICH) 204 through bus 228. PCI/PCIe devices 234 may include, for example, Ethernet adapters, add-in cards, and PC cards for notebook computers. PCI uses a card bus controller, while PCIe does not. Read only memory (ROM) 224 may be, for example, a flash binary input/output system (BIOS). Hard disk drive (HDD) or solid-state drive (SSD) 226a and CD-ROM 230 may use, for example, an integrated drive electronics (IDE), serial advanced technology attachment (SATA) interface, or variants such as external-SATA (eSATA) and micro- SATA (mSATA). A super I/O (SIO) device 236 may be coupled to South Bridge and input/output (I/O) controller hub (SB/ICH) 204 through bus 218.

Memories, such as main memory 208, read only memory (ROM) 224, or flash memory (not shown), are some examples of computer usable storage devices. Hard disk drive (HDD) or solid-state drive (SSD) 226a, CD-ROM 230, and other similarly usable devices are some examples of computer usable storage devices including a computer usable storage medium.

An operating system runs on processing unit 206. The operating system coordinates and provides control of various components within data processing system 200 in FIG. 2. The operating system may be a commercially available operating system for any type of computing platform, including but not limited to server systems, personal computers, and mobile devices. An object oriented or other type of programming system may operate in conjunction with the operating system and provide calls to the operating system from programs or applications executing on data processing system 200.

Instructions for the operating system, the object-oriented programming system, and applications or programs, such as server application 112 in FIG. 1, are located on storage devices, such as in the form of codes 226b on Hard disk drive (HDD) or solid-state drive (SSD) 226a, and may be loaded into at least one of one or more memories, such as main memory 208, for execution by processing unit 206. The processes of the illustrative embodiments may be performed by processing unit 206 using computer implemented instructions, which may be located in a memory, such as, for example, main memory 208, read only memory (ROM) 224, or in one or more peripheral devices.

Furthermore, in one case, code 226b may be downloaded over network 214a (such as network/communication infrastructure 102) from remote system 214b, where similar code 214c is stored on a storage device 214d in another case, code 226b may be downloaded over network 214a to remote system 214b, where downloaded code 214c is stored on a storage device 214d.

A communications unit may include one or more devices used to transmit and receive data, such as a modem or a network adapter. A memory may be, for example, main memory 208 or a cache, such as the cache found in North Bridge and memory controller hub (NB/MCH) 202. A processing unit may include one or more processors or CPUs.

Where a computer or data processing system is described as a virtual machine, a virtual device, or a virtual component, the virtual machine, virtual device, or the virtual component operates in the manner of data processing system 200 using virtualized manifestation of some or all components depicted in data processing system 200. For example, in a virtual machine, virtual device, or virtual component, processing unit 206 is manifested as a virtualized instance of all or some number of hardware processing units 206 available in a host data processing system, main memory 208 is manifested as a virtualized instance of all or some portion of main memory 208 that may be available in the host data processing system, and Hard disk drive (HDD) or solid-state drive (SSD) 226a is manifested as a virtualized instance of all or some portion of Hard disk drive (HDD) or solid-state drive (SSD) 226a that may be available in the host data processing system. The host data processing system in such cases is represented by data processing system 200.

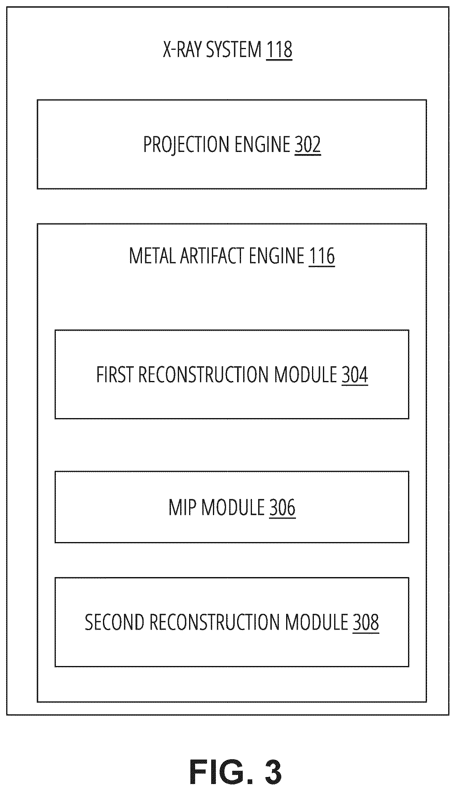

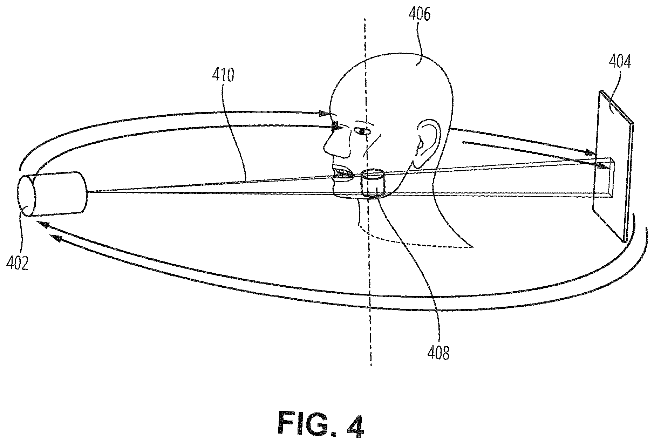

FIG. 3 illustrates an architecture of the x-ray system 118. The x-ray system 118 may operate in a way such as the operation shown in FIG. 4. Upon positioning of a patient or object 406 so that an area of interest (a volumetric region 408) is in a field of view of the x-ray source 402, the x-ray source 402 is operated to emit a beam of x-rays 410 that passes through the object and is captured by the detector 404 on the opposite side. The x-ray source 402 and detector may rotate around the patient, in for example a 180-degree angle, capturing a plurality of 2D images (CBCT image data) which can be used for reconstruction into a 3D model.

Turning back to FIG. 3, the x-ray system 118, when metal is present in the object 406 (such as a portion of a dental cavity) being scanned, reconstructions may not include complete information about the object, thus the x-ray system 118 may be configured to detect the metal (x-ray opaque or substantially x-ray opaque objects) and remove the metal artifacts corresponding to the metals from reconstructions. The x-ray system 118 may operate by projecting, using a projection engine 302, x-rays 410 to scan the volumetric region 408 of the object 406, the projecting generating corresponding cone beam computed tomography (CBCT) image data.

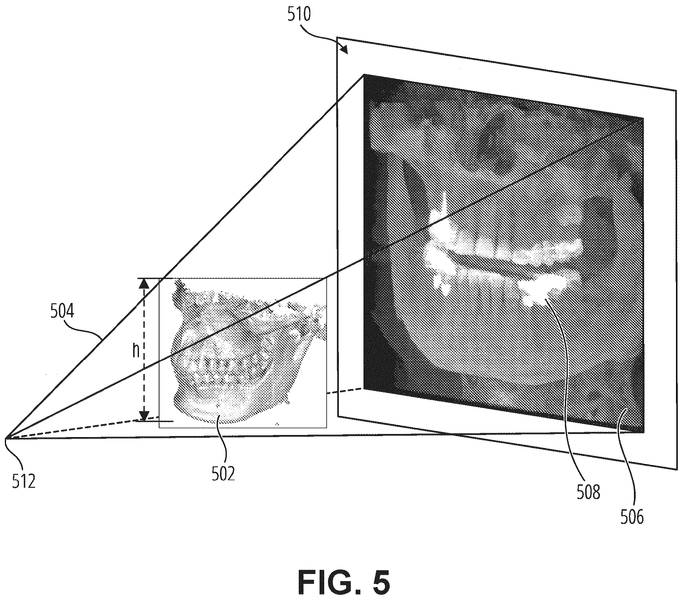

A metal artifact engine 116 of the x-ray system 118 may include a first reconstruction module 304 configured to reconstruct an enlarged CBCT volume 502 (See FIG. 5, the enlarged volume can have the size of a typical human head, for example. In an embodiment, the size is about (e.g., +/-1% or +/-5%, or +/-10%, or +/-20%, or +/-50%, or +/- 1 - 100% ) 20x20xh cm, where h is the height.) from the CBCT image data, the enlarged CBCT volume 502 being representative of the volumetric region 408 as well as volume outside the volumetric region 408. Specifically, to detect metal inside and also outside the volumetric region 408, a significantly enlarged 3D volume may be reconstructed using a reconstruction method (such as the Feldkamp reconstruction). In an example, a 20x20xh cm volume may be generated to image a complete patient head, wherein h is a height of the enlarged CBCT volume 502. For example, a size of the enlarged CBCT volume can be greater than the volumetric region by at least a factor of 1.5 or at least 2.0 or a factor greater than 1.

A maximum intensity projection module (MIP module 306) is configured to generate from the enlarged CBCT volume 502 and a projection geometry 504, maximum intensity projections 506 on a virtual plane 510. A maximum intensity projection 506 is obtained by projecting onto the virtual plane 510, the voxels of the enlarged CBCT volume 502 with that meet a threshold intensity criterion and that fall in the way of rays (virtual rays) traced from a viewpoint 512 of the projection geometry 504. Since multiple voxels may be projected to the same detector pixel in the virtual plane, an operation may also be performed to select the **"maximum". The projection geometry 504 may be the geometry used during the reconstruction** of the enlarged CBCT volume 502. Further, the virtual plane 510 corresponds to the detector in terms of position, orientation, size, resolution, etc. Commonly, the geometry used during reconstruction is the geometry of the physical scan. Using the projection geometry of the physical scan allows a subsequent transfer of location information from the maximum intensity projections to the CBCT image data. In an aspect, the projection geometry 504 may comprise a plurality of projection matrices (3x4 matrices) that can project any point of the 3D patient coordinate space (such as homogeneous coordinate space with coordinates (x, y, z,1)) to a corresponding detector position.

Further, the enlarged CBCT volumes 502 shows the limited angle artifacts in the outer regions, which may make it difficult to detect metal in the volume itself. However, the maximum intensity projections 506 may not show this limited angle artifacts, as their projection geometry usually corresponds to the projection geometry used for reconstruction (the projection directions are the same, so the information in the enlarged volume is quite correct for the projection directions). Information of the maximum intensity projections may also not be affected by the limited angle artifacts for these projection directions. Even further, though metal detection in a volume can be made more difficult by cupping artifacts caused by the metals, the cupping artifacts may further be reduced or eliminated herein due to the projection of voxels with maximum intensity along each ray. Thus, for a cupping artifact, the bright values representative of borders of an item are projected to the virtual plane 510 as opposed to the less bright/weaker signal representative of the middle part of the item.

The MIP module 306 may further detect attenuated image areas 508 in the maximum intensity projections 506 corresponding to metal. The detection may include using a predetermined threshold value to determine areas corresponding to metal. The detection may alternatively involve the use of a trained neural network that is trained with a large number of example training attenuated image areas corresponding to metal and tested and validated using a dataset of test and validation attenuated image areas.

The detected attenuated image areas 508 corresponding to metal can be suppressed in the CBCT image data so that they cause fewer artifacts in a subsequent volume reconstruction. This can be achieved by corresponding or masking (e.g., transferring locations of) the detected attenuated image areas 508 corresponding to metal to the CBCT image data and reconstructing a volume using the CBCT image data. For the corresponding, if the same projection geometry 504 for generating the maximum intensity projections 506 as were used as the projection geometry 504 used for the physical scan when the CBCT image data was generated, the correspondence of the image areas is simple, as the image areas are identical. If there was an adaption such as an adaptation of the resolution, for example, a corresponding adaptation such as an upsampling/downsampling/smoothing when corresponding the image areas (or afterwards) may be needed.

After the attenuated image areas 508 corresponding to metal are corresponded to the CBCT image data, a second reconstruction module 308 reconstructs a final CBCT volume using the CBCT image data by suppression of areas of the CBCT image data corresponding to the attenuated image areas of the maximum intensity projections corresponding to metal. More specifically, the second reconstruction module 308 reconstructs the final volume by firstly modifying the CBCT image data that includes the locations of the attenuated image areas corresponding to metal through altering the areas of the CBCT image data corresponding to the attenuated image areas to completely remove or reduce the effects or artifacts of the metal in a subsequent reconstruction. The altering may include, for example, inpainting wherein pixels or areas of the CBCT image data corresponding to the attenuated image areas are substituted with artificial data. In an example, an interpolation of surrounding pixel/2D information may be performed. In another example, an interpolation of surrounding pixel information in the sinogram may be performed, taking the temporally neighboring projection images into account. In some cases, the interpolation can be linear, or with splines, or performed with AI. In other cases, such as in the case of slightly lower absorption the original pixel values may be modified with an additive offset or multiplied by a predetermined weighting factor. The altering therefore ensures that a subsequent reconstruction using the modified CBCT image data does not have the metal or has less metal artifacts in the reconstructed volume.

Thus, responsive to modifying the CBCT image data, the second reconstruction module 308 reconstructs an intermediate volume using the modified CBCT image data. This **can be done with a reconstruction algorithm such as the "Feldkamp" algorithm. In this** intermediate volume the metal and metal artifacts are absent or suppressed due to the modification of the CBCT image data. The image areas of the maximum intensity projections or of the image areas of the CBCT image data corresponding to the metal before the modification are then separately corresponded into the intermediate volume to modify the intermediate volume. This may be achieved by using the projection geometry 504 and back-projecting said image areas (e.g., generated as a binary mask) to the intermediate volume. The intersection of the back projected image areas can be segmented in the intermediate volume (e.g., by applying a threshold or other segmentation techniques) to obtain volume areas in the intermediate volume corresponding the back projected image areas. The voxel values to be inserted in these volume areas may be obtained by interpolating from the enlarged CBCT volume 502 (which may have a different voxel size than the intermediate volume). Alternatively, an extra non-enlarged volume may be reconstructed, to copy the masked voxel values. Further, a blending may be performed to smoothen the transition of voxel values from the intermediate volume to the reinserted voxel values. Due to the separate reinsertion metal based on the correspondence of said image areas into the intermediate volume, only the metal is represented in the intermediate volume whereas the metal artifacts are absent. Metal artifacts typically also exist at some distance from the metallic object (as streaks or shadows in the "far **field"). These may not be reintroduced when reinserting the metal voxels ("near field").** The modified intermediate volume can then be displayed as a final volume.

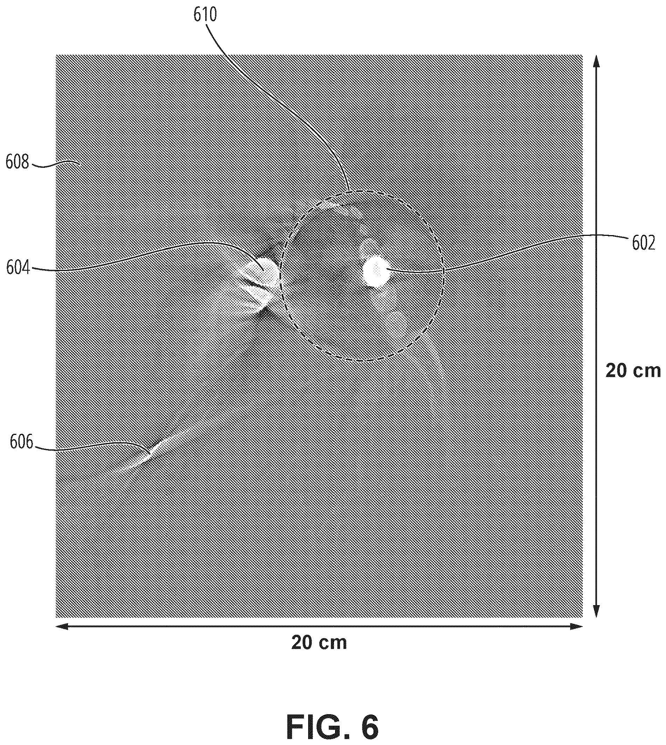

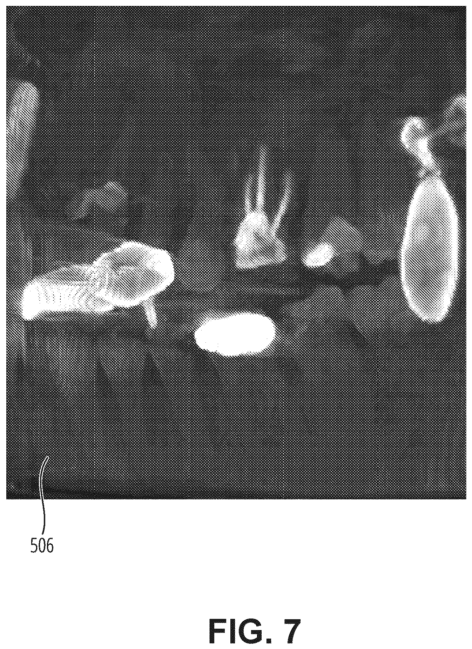

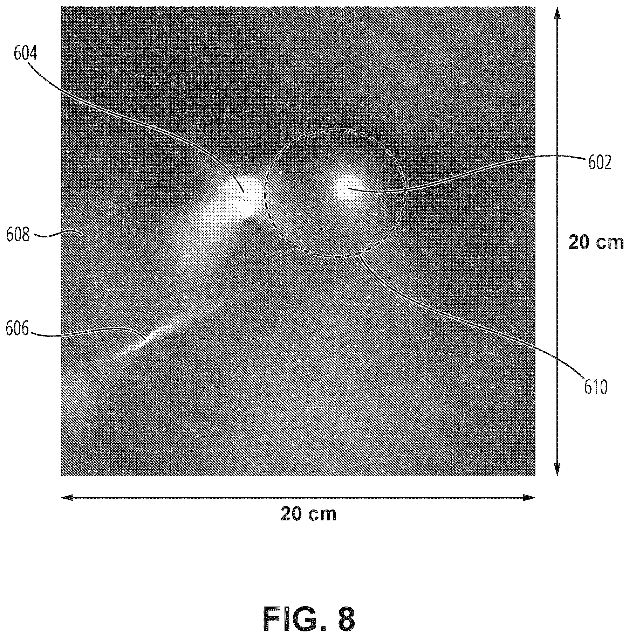

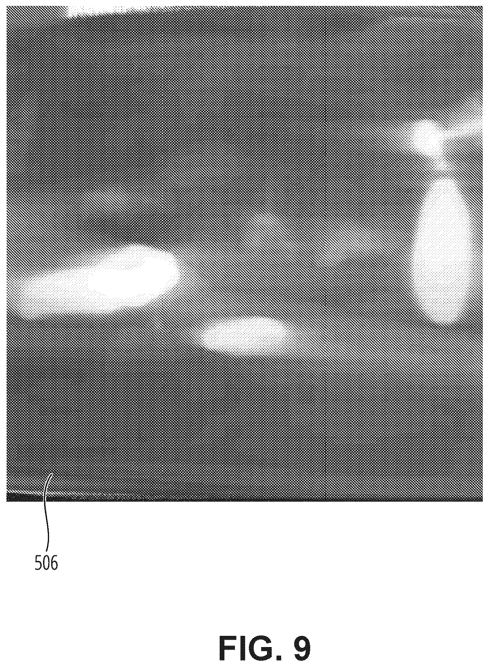

Turning now to FIG. 6 - FIG. 9, example slices 608 through an enlarged CBCT volume 502 and maximum intensity projections 506 corresponding to the slices 608 are shown. FIG. 6 discloses an axial volume slice 608 through the enlarged CBCT volume 502 illustrating a section 610 of the slice corresponding to the volumetric region 408. The figure also illustrates an inner metal region 602 representative of a metal in the volumetric region 408. A first outer metal region 604 and a second outer metal region 606 illustrate metal and/or metal artifacts in the enlarged CBCT volume 502. In FIG. 6, the enlarged CBCT volume 502 is generated using filtered back projection which produces sharp edges or contours of metal structures outside the section 610 that are however deficient in terms of brightness or reliability of gray values of the metal areas. On the other hand, in FIG. 8, the enlarged CBCT volume 502 from which the slice 608 is obtained is generated using unfiltered back projection which produces comparatively blurred contours which, however, have a more consistent or brighter gray values of metal areas outside of the section 610. FIG. 7 depicts the maximum intensity projection 506 of the enlarged CBCT volume 502 of FIG. 6 created using filtered back projection geometry whereas FIG. 9 depicts the maximum intensity projection 506 of the enlarged CBCT volume 502 of FIG. 8 created using unfiltered back projection.

The illustrative embodiments thus, recognize that different types or a combination of maximum intensity projections can be generated and utilized for the methods described herein. For example, in an illustrative embodiment, at least two enlarged CBCT volumes 502 can be generated including a first enlarged CBCT volume and an additional enlarged CBCT volume. At least one of the at least two enlarged CBCT volumes can be generated with filtered back-projection and at least another of the at least two enlarged CBCT volumes can be generated with unfiltered back-projection. For example, the first enlarged CBCT volume can be generated with filtered back-projection and the additional enlarged CBCT volume can be generated with unfiltered back projection. At least two sets of maximum intensity projections corresponding to the at least two enlarged CBCT volumes are then generated and the attenuated image areas 508 corresponding to metal can be detected using properties of the at least two enlarged CBCT volumes, such as brightness and contours of corresponding areas.

Of course, the examples described herein are not meant to be limiting as other examples may be obtained in view of the descriptions herein. For example, other examples include:
Example 1: A method comprising: projecting x-rays to scan a volumetric region of an object, generating corresponding cone beam computed tomography (CBCT) image data; reconstructing an enlarged CBCT volume from the CBCT image data, the enlarged CBCT volume representative of the volumetric region and a volume outside the volumetric region; generating from the enlarged CBCT volume and a projection geometry, maximum intensity projections on a virtual plane; detecting attenuated image areas in the maximum intensity projections corresponding to metal; corresponding the detected attenuated image areas corresponding to the metal to the CBCT image data; and reconstructing a final CBCT volume using the CBCT image data by suppression of the areas of the CBCT image data corresponding to the attenuated image areas of the maximum intensity projections.
Example 2: The method of example 1, wherein the enlarged volume is representative of the entire object.
Example 3: The method of any previous example, wherein the enlarged volume is generated using filtered or unfiltered back-projection.
Example 4: The method of any previous example, wherein the generating comprises, for each of the maximum intensity projections, projecting voxels of the enlarged CBCT volume along a virtual projection ray that meet one or more thresholds to the virtual plane.
Example 5: The method of any previous example, wherein the one or more thresholds comprise a maximum intensity threshold.
Example 6: The method of any previous example, wherein reconstructing the final CBCT volume comprises: modifying the CBCT image data by altering the areas of the CBCT image data corresponding to the attenuated image areas corresponding to the metal to remove or reduce the effects of the metal in a subsequent reconstruction; reconstructing an intermediate volume using the modified CBCT image data; corresponding the image areas of the maximum intensity projections or of the CBCT image data corresponding to the metal to the intermediate volume; reinserting the metal to modify the intermediate volume; and displaying the modified intermediate volume as a final volume.
Example 7: The method of example 6, further comprising displaying the intermediate volume along with the final volume.
Example 8: The method of example 6 or 7, wherein modifying the areas of the CBCT image data corresponding to the attenuated image areas includes interpolating, extrapolating or filling in meaningful information, for example based on surrounding image areas that surround said areas.
Example 9: The method of examples 6 - 8, wherein at least two enlarged CBCT volumes are generated, including said enlarged CBCT volume and an additional enlarged CBCT volume. At least one of the at least two enlarged CBCT volumes is generated with filtered back-projection, and at least another of the at least two enlarged CBCT volumes is generated with unfiltered back-projection. At least two sets of maximum intensity projections corresponding to the at least two enlarged CBCT volumes are generated, including said maximum intensity projections and additional maximum intensity projections. The attenuated image areas are detected using both the maximum intensity projections and the additional maximum intensity projections.
Example 10: The method of any previous example, wherein the detection of the attenuated image areas is performed using a thresholding process or a neural network.
Example 11: An x-ray system comprising: a processor; and a memory storing instructions that, when executed by the processor, configure the apparatus to perform any of examples 1 - 10.
Example 12: A non-transitory computer-readable storage medium including instructions that, when executed by a computer, cause the computer to perform any of examples 1 - 10.

Thus, a computer implemented method, system or apparatus, and computer program product are provided in the illustrative embodiments for correcting metal artifacts and other related features, functions, or operations. Where an embodiment or a portion thereof is described with respect to a type of device, the computer implemented method, system or apparatus, the computer program product, or a portion thereof, are adapted or configured for use with a suitable and comparable manifestation of that type of device.

The present invention may be a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, including but not limited to computer-readable storage devices as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method comprising:
projecting x-rays to scan a volumetric region of an object, the projecting generates corresponding cone beam computed tomography (CBCT) image data;
reconstructing an enlarged CBCT volume from the CBCT image data, the enlarged CBCT volume representative of the volumetric region and a volume outside the volumetric region;
generating from the enlarged CBCT volume and a projection geometry, maximum intensity projections on a virtual plane;
detecting attenuated image areas in the maximum intensity projections corresponding to metal;
corresponding the detected attenuated image areas corresponding to the metal to areas of CBCT image data; and
reconstructing a final CBCT volume using the CBCT image data by suppression of the areas of the CBCT image data corresponding to the detected attenuated image areas of the maximum intensity projections.

2. The method of claim 1, wherein the enlarged volume is representative of the entire object.

3. The method of claim 1, wherein the enlarged volume is generated using filtered or unfiltered back-projection.

4. The method of any of claims 1-3, wherein the generating comprises, for each of the maximum intensity projections:
projecting voxels of the enlarged CBCT volume along a virtual projection ray that meet one or more thresholds to the virtual plane.

5. The method of claim 4, wherein the one or more thresholds comprises a maximum intensity threshold.

6. The method of claim 1, wherein reconstructing the final CBCT volume comprises:
(a) modifying the CBCT image data by modifying said areas of the CBCT image data corresponding to the detected attenuated image areas to remove or reduce the effects of the metal in a subsequent reconstruction;
(b) reconstructing an intermediate volume using the modified CBCT image data;
(c) corresponding the attenuated image areas of the maximum intensity projections corresponding to the metal or said areas of the CBCT image data to the intermediate volume;
(d) transferring information related to the metal, based on (c), to modify the intermediate volume; and
(e) displaying the modified intermediate volume as a final volume.

7. The method of claim 6, further comprising:
displaying the intermediate volume along with the final volume.

8. The method of claim 6 or claim 7, wherein modifying said areas of the CBCT image data includes interpolating based on surrounding image areas that surround said areas.

9. The method of any of claims 6-8, wherein:
at least two enlarged CBCT volumes are generated including said enlarged CBCT volume and an additional enlarged CBCT volume, at least one of the at least two enlarged CBCT volumes being generated with filtered back-projection and at least another of the at least two enlarged CBCT volumes being generated with unfiltered back-projection;
at least two sets of maximum intensity projections corresponding to the at least two enlarged CBCT volumes are generated including said maximum intensity projections and additional maximum intensity projections; and
the attenuated image areas are detected using both the maximum intensity projections and the additional maximum intensity projections.

10. The method of claim 1, wherein the detection of the attenuated image areas is performed using a thresholding process or a neural network.

11. The method of claim 1, further comprising configuring a size of the enlarged CBCT volume to the size of a human head.

12. An x-ray system comprising:
a processor; and
a memory storing instructions that, when executed by the processor, configure the apparatus to:
project x-rays to scan a volumetric region of an object and generate corresponding cone beam computed tomography (CBCT) image data;
reconstruct an enlarged CBCT volume from the CBCT image data, the enlarged CBCT volume representative of the volumetric region and a volume outside the volumetric region;
generate from the enlarged CBCT volume and a projection geometry, maximum intensity projections on a virtual plane;
detect attenuated image areas in the maximum intensity projections corresponding to metal;
correspond the detected attenuated image areas corresponding to the metal to areas of the CBCT image data; and
reconstruct a final CBCT volume using the CBCT image data by suppression of the areas of the CBCT image data corresponding to the detected attenuated image areas of the maximum intensity projections.

13. The x-ray system of claim 12, wherein the processor causes the apparatus to generate the enlarged volume using filtered or unfiltered back-projection.

14. The x-ray system of claim 12, wherein the processor causes the apparatus to generate each of the maximum intensity projections by:
projecting on the virtual plane, using virtual projection rays, voxels of the enlarged CBCT volume that have a maximum intensity along the virtual projection rays.

15. The x-ray system of any of claims 12-14, wherein the processor causes the apparatus to reconstruct the final CBCT volume by:
(a) modifying the CBCT image data by modifying said areas of the CBCT image data corresponding to the detected attenuated image areas to remove or reduce the effects of the metal in a subsequent reconstruction;
(b) reconstructing an intermediate volume using the modified CBCT image data;
(c) corresponding the attenuated image areas of the maximum intensity projections corresponding to the metal or said areas of the CBCT image data to the intermediate volume;
(d) transferring information related to the metal, based on (c), to modify the intermediate volume; and
(e) displaying the modified intermediate volume as a final volume.
